# EUROPEAN PATENT SPECIFICATION

(11) **EP 3 120 495 B1**
(45) Date of publication and mention of the grant of the patent: **28.03.2018**
(21) Application number: 15711899.3
(22) Date of filing: 22.01.2015
(51) Int. Cl.: H04L 12/24

(54) **A SYSTEM AND METHOD FOR MONITORING AND MANAGING INFORMATION TECHNOLOGY ASSETS**
SYSTEM UND VERFAHREN ZUR ÜBERWACHUNG UND VERWALTUNG VON INFORMATIONEN ÜBER TECHNOLOGIE-ASSETS
SYSTEME ET PROCEDE DE SURVEILLANCE ET GESTION D'ACTIFS DE TECHNOLOGIE D'INFORMATION

(30) Priority: 18.03.2014 TR 201403153
(43) Date of publication of application: 25.01.2017
(73) Proprietor: Turkiye Petrol Rafinerileri Anonim Sirketi Tupras, 41780 Korfez/Kocaeli (TR)
(72) Inventor: AYDOGAN, Burak, 41790 Korfez / Kocaeli (TR); AYDIN, Mehmet, 41790 Korfez / Kocaeli (TR); BAKIR, Mustafa, 41790 Korfez / Kocaeli (TR); DURMAZ, Caglar, 41790 Korfez Kocaeli (TR); UNALIR, Murat, Osman, 35100 Bornova / Izmir (TR); PESEN, Mustafa, Kurtulus, 41790 Korfez / Kocaeli (TR)
(74) Representative: Cayli, Hülya
(86) International application number: PCT/TR2015/000029
(87) International publication number: WO 2015/142300

(56) References cited:
- US-A1- 2006 053 172
- US-A1- 2009 125 872
- US-A1- 2009 183 031
- US-A1- 2012 173 493

## Description

### Field of the Invention

The present invention relates to a system and method for inspecting any data received from information technology assets such as a computer, a network switch and a sensor in different domains such as software, network, hardware, industrial systems etc., in a production field, by collecting such data in one pool and by performing an effect analysis method and a root analysis method.

### Background Art

In the industry, in systems wherein a number of assets such as a computer, a network switch and a sensor must be operated in coordination, controlling whether such assets operates properly or not is of utmost importance for the entire system to operate as required. Specifically and illustratively, applications used for monitoring assets in industry fields such as refineries operate independent from each other and are used for different purposes. Different control applications are employed for assets such as a computer, a network switch and a sensor in different domains including software, network, hardware and industrial systems.

In systems comprising multiple assets, continuity of an asset may be influenced by other assets in another domain. Since other assets in different domains are monitored by different control applications, data received from a plurality of control applications must be assessed all together, with the aid of experience of the responsible persons and relevant documents. This may not always be possible; and yet it is highly risky to rely on just experience and practice for such a procedure. In working environment of time-sensitive refineries, it is critical to collect data from different persons and applications and to Interpret the same. This is accomplished by bringing together employees of different specialty fields, and sharing data and experience. It is hard to ensure such an integrated conscious and takes a long time.

In prior art, various methods such as a root cause analysis are used in order to monitor any errors experienced in assets controlled by different sources. Although the root cause analysis is an effective method in finding the source of an error, it cannot perform a process for assessment of results that may arise from that error. Therefore, an effect analysis is employed for assessing how an error that has been encountered in an asset will affect other assets or the entire system. These analysis methods are effective in determining the reasons and results of an error in relation to the assets in a single domain. However, since an asset in a domain may affect an asset in another domain in systems such as refineries comprising different domains (i.e. software, a computer network, hardware, industrial systems), it is cumbersome to use a root cause analysis and an effect analysis in systems comprising different domains.

The state-of-art document US2009183031A1 discloses performing root cause analysis and effect analysis on assets in a domain, However, this document is silent about an application for collecting assets in different domains in one pool and assessing thereof.

Another prior art document US2012173493A1 discloses a method and an apparatus for providing safeguarding against malicious ontologies. Said method comprises, causing examination of a received file associated with an ontology to determine a namespace marking for subjects, predicates and objects of triples of the file that are to be stored in a database; utilizing relationship data corresponding to the namespace marking to identify triples whose subjects or objects do not correspond to the ontology: and determining whether the relationship data enables the triples whose subjects or objects do not correspond to the ontology to be considered as a valid data set for storage in the database. However, said document does not disclose collecting assets in different domains in one pool and prevent erroneous operations.

### Object of the Invention

With the present invention, there is provided an inspection method for inspecting any data received from information technology assets such as a computer, a network switch and a sensor in distinct domains such as software, network, hardware, industrial systems, in a production field, by collecting such data in one pool and by performing an effect analysis method and a root cause analysis method.

An object of the present invention is to ensure that all data received from different sources are collected in one pool and assessed therein.

Another object of the invention is to perform an effect analysis with the designed rule-based effect analysis building blocks prior to several maintenance or investment works, and to perform more reliable operations by defining unpredictable possible effects.

Another object of the invention is to perform a root cause analysis with the designed rule-based root cause analysis building blocks in case of an accidental situation and to rapidly adapt new asset types and changing work processes with the rule-based architecture. The continuity of process-handling systems is increased by performing an effect and root cause analysis.

Still another object of the invention is to prevent process-handling systems from operating with erroneous data by performing an effect and root cause analysis. Thus, a possible performance decrease and an increase in cost are avoided.

An object of the invention is to minimize engineering costs to be incurred by the production units for determination of the problem in cases of accidental situations.

Another object of the invention is to increase reliability of the systems handling refinery processes so as to relieve the responsible persons from producing individual solutions for the problems.

In order to achieve the above and other advantages that will be apparent from the following detailed description, the present invention is a system wherein all data received from information technology assets in different domains such as software, network, hardware, industrial systems etc. in a production field is collected in one pool, ontologies are created based on the operation of the assets and their interactions by determining working relations between the assets and using these working relations, and are inspected using effect analysis and root cause analysis methods, characterized by comprising a triple storage database to which ontology schemes are conveyed, a content addition unit through which assets are added to the system, an inference engine allowing a rule-based inference on the ontologies, an effect analysis unit determining the effect that may occur in consequence of alarm data, and a root cause analysis unit determining the reason of the alarms.

### Brief Description of the Drawings

In order for the configuration of the present invention and its advantages with additional elements to be best understood, it must be evaluated with the below-described drawings.

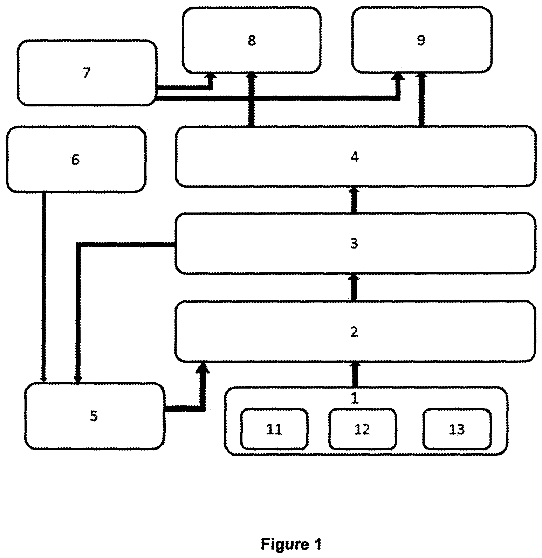

**Figure 1****:** A work flow diagram of the inventive system.

### Reference Numbers:

**1.** Ontology scheme files
   **11.** RBT scheme file
   **12.** RBT sample file
   **13.** RBT domain analysis file
**2.** Triple Storage Database
**3.** Application Programming Interface
**4.** Inference Engine
**5.** Content Addition Unit
**6.** Mapping Application
**7.** Alarm Queue Unit
**8.** Effect Analysis Unit
**9.** Root Cause Analysis Unit

### Detailed Description of the Invention

In the detailed description, preferred configurations of the inventive system and method are merely disclosed for better understanding of the subject matter and are not intended to be limiting.

In systems such as refineries comprising different domains (i.e. software, a computer network, hardware, and industrial systems), an asset such as a computer, a network switch and a sensor in a domain may affect operation of other assets in another domain. Therefore, in these systems, switches between domains are required in order to monitor an error experienced in an asset (defining the reasons and results of the error). However, since the number of assets in domains is high, monitoring an error is troublesome, With the present invention, there is provided an inspection system and method for monitoring an error in systems comprising different domains.

In computer science, ontologies provide information in an information domain as a set of concepts. This is accomplished by using a dictionary for designating the type, characteristic and interrelation of the concepts.

In the inventive method, preferably all assets such as computers, network switches, sensors in different domains are analyzed so as to determine the working relations between the said assets. By using these determined working relations, ontologies are created based on the operation and interaction of the assets. When an error is experienced in operation of an asset, the source of the error is determined by using the root cause analysis method, and then assets that may be affected by this error are determined based on the ontology formed by performing an effect analysis method on the source of the error.

The inventive system comprises 4 main units. These are a triple storage database (2) to which ontology scheme files (1) are conveyed, a content addition unit (5) through which assets are added to the system, an inference engine (4) for performing a rule-based inference on the ontologies and finally, an effect analysis unit (8) determining the effect that may occur in consequence of alarm data, and a root cause analysis unit (9) determining the reason of the alarms.

The assets in different domains are classified based on several features (i.e. a class including all computers and servers in different domains). The said ontology scheme files (1) comprise a RBT scheme file (11) wherein the classes of assets, class hierarchy, attributes of data and objects, characteristics of the attributes are defined, a RBT sample file (12) wherein only asset samples are included, and RBT effect analysis files (13) having building blocks of the effect and root cause analysis methods. The ontology scheme files (1) are, for one time, conveyed to the triple storage database (2), and in case of any changes, new scheme information is updated in the triple storage database (2).

With the mapping application (6), a mapping is performed between the ontology scheme files (1) and the data sources of the assets. The content addition unit (5) using the mapping information adds the information on the assets to the triple storage database (2) via an application programming interface (3).

In case of an alarm situation where an error is experienced, the root cause analysis and effect analysis maps are created with the inference engine (4) using the effect analysis rules in the RBT effect analysis file (13).

The alarm queue unit (7) queues alarm information from the applications controlling whether all assets currently used in the refinery operate properly (i.e. at the stage of controlling whether a network device operates or not, it may send a connection command to that device (in other words it may ping) and if no response is received from the device, it is determined that the device has a working problem). The effect analysis unit (8) and the root cause analysis unit (9) check this queue at certain intervals and operate the inference engine (4), whose operation is described above, if an alarm is generated so as to obtain the root cause analysis and effect analysis maps. These units send an action warning to those responsible for maintenance of assets in the map obtained and status information to the key users.

In an illustrative embodiment of the invention, with an analysis of the assets, the following are formed: an ontology wherein classes for assets, class hierarchy, attributes of data and objects and characteristics of the attributes are defined; another ontology including only the features of the assets, and a further ontology comprising ontology building block and status information of the assets so as to be used in the effect analysis and root cause analysis. While creating said ontologies, standards such as ISO 15926 refinery asset management standard, ISO 19770 software asset management standard and ITIL information technology infrastructure library standard are examined, and subsequently existing applications are also examined, depending on the requirement (i.e. requirements of the refinery), in order to generate concept maps. The classes, data and object attributes are defined in the generated concept maps. And with the use of the concept maps, said ontologies are created and updated, when necessary. By using said ontologies, it is possible to observe relations of the assets in different domains. Thus, when an error is experienced in the system, the source of the error and assets that may be affected by the error can be determined. Furthermore, before an error occurs in the system, possible errors that may occur in the system can be evaluated and thus a risk analysis may also be carried out.

In a preferred embodiment of the invention, the inventive inspection method comprises a metadata management methodology for ensuring continuity. In the said metadata management methodology, any data processed in the system (all data inputs) are recorded. Thus, when a modification is realized in the inspection method (i.e. a modification is made in an ontology), said modification may be observed by the user (i.e. an employee).

In another preferred embodiment of the invention, assets included in domains are mapped to the responsible users (employees). In this embodiment, if an error is experienced in operation of an asset or if an asset is affected from an error that has occurred in another asset, the results of the root cause analysis and the effect analysis generated for that error are send (i.e. via e-mail) to the user mapped to the respective asset. Thus, when an error occurs in an asset, necessary measures can be taken thanks to the analysis results sent to the person responsible for that asset.

In another preferred embodiment of the invention, inventories of the assets In the system are determined at certain intervals (e.g. every day) and if there is an asset newly-added to the system, previously formed ontologies are updated. Thus, the inventive method is quickly adapted to the system changes.

With the inspection method according to the present invention, when an error occurs in the operation of an asset, the source of the problem may be detected, even if it is in a different domain, Moreover, other assets that may be affected from the error occurred and that may be located in different domains are also detected. Thus, when faced with a problem, it is possible to solve the problem in a short period of time and other problems that may result from this problem are determined so as to take necessary measures.

## Claims

1. A system, which collects all data received from information technology assets such as a computer or a network switch or a sensor in different domains such as software, network, hardware or industrial systems in a production field in one pool, which creates ontologies based on the operation of the assets and their interactions by determining working relations between the assets and using these working relations, and which inspects said ontologies by using an effect analysis method and a root cause analysis method, said system comprising;
- ontology scheme files (1) in which information about the information technology assets are stored,
- a mapping application (6) performing a mapping between the ontology scheme files (1) and the data sources of the information technology assets, according to the working relations between the assets,
- a triple storage database (2) to which ontology scheme files (1) are conveyed,
- a content addition unit (5) adding data received from the information technology assets to the triple storage database (2) by using mapping information obtained in the mapping application (6),
- an alarm queue unit (7) that queues alarm information from applications controlling whether all assets used in the refinery operate properly,
- an inference engine (4) creating root cause analysis and effect analysis maps by performing a rule-based inference on the ontologies with respect to the alarms queued by the alarm queue unit (7),
- an effect analysis unit (8) determining the effect that may occur in consequence of alarm data according to the maps created by the inference engine (4), and
- a root cause analysis unit (9) determining the reason of the alarms according to the maps created by the inference engine (4)
wherein said effect analysis unit (8) and the root cause analysis unit (9) check alarm information queue by said alarm queue unit (7) at certain intervals and operate the inference engine (4), if an alarm is generated so as to obtain root cause analysis and effect analysis maps.

2. A system according to claim 1, **characterized in that** said ontology scheme files (1) comprise a scheme file (11) wherein the classes of assets, class hierarchy, attributes of data and objects, characteristics of the attributes are defined, a sample file (12) wherein only asset samples are included, and effect analysis files (13) having building blocks of the effect and root cause analysis.

## Patentansprüche

1. System, das alle von Informationstechnologiegeräten empfangenen Daten, wie etwa von einem Computer oder einem Netzwerkschalter oder einem Sensor in verschiedenen Gebieten, wie etwa Software, Netzwerke, Hardware oder Industrieanlagen in einem Produktionsfeld, in einer Datenbasis sammelt, das Ontologien auf Basis des Betriebs der Geräte und ihrer Wechselwirkungen erzeugt, indem Arbeitsbeziehungen zwischen den Geräten festgestellt werden und diese Arbeitsbeziehungen verwendet werden, und das die Ontologien untersucht, indem ein Effektanalyseverfahren und ein Ursachenanalyseverfahren angewendet werden, wobei das System aufweist:
- Ontologie-Schemadateien (1), in denen Informationen über die Informationstechnologiegeräte gespeichert sind,
- eine Abbildungsanwendung (6), die eine Abbildung zwischen den Ontologie-Schemadateien (1) und den Datenquellen der Informationstechnologiegeräte gemäß den Arbeitsbeziehungen zwischen den Geräten durchführt,
- eine Triple-Datenbank (2), zu der die Ontologie-Schemadateien (1) übertragen werden,
- eine Inhalte-Hinzufügungseinheit (5), die von den Informationstechnologiegeräten empfangene Daten der Triple-Datenbank (2) hinzufügt, indem von der Abbildungsanwendung (6) erhaltene Abbildungsinformationen verwendet werden,
- eine Alarm-Wartschlangeneinheit (7), die Alarminformationen von Anwendungen, die kontrollieren, ob alle in der Raffinerie verwendeten Geräte ordnungsgemäß arbeiten, in eine Wartschlange einordnet,
- eine Inferenzmaschine (4), die Ursachenanalyse- und Effektanalyseabbildungen erzeugt, indem regelbasierte Inferenzverfahren auf die Ontologien bezüglich der Alarme durchgeführt werden, die in der Alarm-Warteschlangeneinheit (7) in eine Warteschlange eingeordnet sind,
- eine Effektanalyseeinheit (8), die den Effekt feststellt, der infolge von Alarmdaten gemäß den durch die Inferenzmaschine (4) erzeugten Abbildungen auftreten kann, und
- eine Ursachenanalyseeinheit (9), die den Grund der Alarme gemäß den von der Inferenzmaschine (4) erzeugten Abbildungen feststellt,
wobei die Effektanalyseeinheit (8) und die Ursachenanalyseeinheit (9) die Alarminformations-Warteschlange von der Alarm-Warteschlangeneinheit (7) in bestimmten Intervallen prüfen und die Inferenzmaschine (4) betreiben, wenn ein Alarm erzeugt wird, um so Ursachenanalyse- und Effektanalyse-Abbildungen zu erhalten.

2. System nach Anspruch 1, **dadurch gekennzeichnet, dass** die Ontologie-Schemadateien (1) eine Schemadatei (11), in der die Klassen der Geräte, die Klassenhierarchie, Attribute von Daten und Objekten, Charakteristiken von Attributen definiert sind, eine Probedatei (12), in der nur Probegeräte enthalten sind, und Effektanalysedateien (13) mit Aufbaublöcken der Effektanalyse und der Ursachenanalyse enthalten.

## Revendications

1. Système, qui collecte toutes les données reçues à partir d'actifs de technologie d'information tels qu'un ordinateur ou un commutateur de réseau ou un capteur dans différents domaines tels que des systèmes logiciels, de réseau, matériels ou industriels dans un champ de production dans un gisement, qui crée des ontologies sur la base du fonctionnement des actifs et de leurs interactions en déterminant des relations de travail entre les actifs et en utilisant ces relations de travail, et qui inspecte lesdites ontologies en utilisant un procédé d'analyse d'effet et un procédé d'analyse de causes fondamentales, ledit système comprenant :
- des fichiers de modèle d'ontologie (1) dans lesquels des informations concernant les actifs de technologie d'information sont stockés,
- une application de mappage (6) effectuant un mappage entre les fichiers de modèle d'ontologie (1) et les sources de données des actifs de technologie d'information, en fonction des relations de travail entre les actifs,
- une base de données de stockage triple (2) à laquelle des fichiers de modèle d'ontologie (1) sont acheminés,
- une unité d'ajout de contenu (5) ajoutant des données reçues à partir des actifs de technologie d'information à la base de données de stockage triple (2) en utilisant des informations de mappage obtenues dans l'application de mappage (6),
- une unité de file d'attente d'alarmes (7) qui met en file d'attente des informations d'alarme provenant d'applications contrôlant que tous les actifs utilisés dans la raffinerie fonctionnent correctement,
- un moteur d'inférence (4) créant des cartes d'analyse de causes fondamentales et d'analyse d'effet en effectuant une inférence à base de règles sur les ontologies par rapport aux alarmes mises en file d'attente par l'unité de file d'attente d'alarmes (7),
- une unité d'analyse d'effet (8) déterminant l'effet qui peut se produire en conséquence de données d'alarme en fonction des cartes créées par le moteur d'inférence (4), et
- une unité d'analyse de causes fondamentales (9) déterminant la raison des alarmes en fonction des cartes créées par le moteur d'inférence (4)
dans lequel ladite unité d'analyse d'effet (8) et l'unité d'analyse de causes fondamentales (9) vérifient des informations d'alarme mises en file d'attente par l'unité de file d'attente d'alarmes (7) à certains intervalles et actionnent le moteur d'inférence (4), si une alarme est générée, de manière à obtenir des cartes d'analyse de causes fondamentales et d'analyse d'effet.

2. Système selon la revendication 1, **caractérisé en ce que** lesdits fichiers de modèle d'ontologie (1) comprennent un fichier de modèle (11) dans lequel les classes d'actifs, une hiérarchie de classes, des attributs de données et d'objets, des caractéristiques des attributs sont définis, un fichier échantillon (12) dans lequel seuls des échantillons d'actifs sont inclus, et des fichiers d'analyse d'effet (13) ayant des blocs de construction de l'analyse d'effet et de causes fondamentales.
